# EUROPEAN PATENT SPECIFICATION

(11) **EP 3 131 266 B1**
(45) Date of publication and mention of the grant of the patent: **07.03.2018**
(21) Application number: 16181042.9
(22) Date of filing: 25.07.2016
(51) Int. Cl.: G06F 9/44, G06Q 30/02, G06F 3/0481, H04L 29/08, H04L 29/06

(54) **METHOD AND APPARATUS FOR PRESENTING MULTIMEDIA INFORMATION**
VERFAHREN UND VORRICHTUNG ZUR PRÄSENTATION VON MULTIMEDIA-INFORMATIONEN
PROCÉDÉ ET APPAREIL DE PRÉSENTATION D'INFORMATIONS MULTIMÉDIA

(30) Priority: 13.08.2015 CN 201510496713
(43) Date of publication of application: 15.02.2017
(73) Proprietor: Xiaomi Inc., Beijing 100085 (CN)
(72) Inventor: LIU, Hongjie, Haidian District, Beijing 100085 (CN); LIU, Wei, Haidian District, Beijing 100085 (CN); LI, Minghao, Haidian District, Beijing 100085 (CN)
(74) Representative: Sadler, Peter Frederick

(56) References cited:
- WO-A1-2011/022808
- US-A1- 2009 319 375
- US-A1- 2014 355 955

## Description

### TECHNICAL FIELD

The present disclosure generally relates to a technical field of terminal, and more particularly to a method and apparatus for presenting multimedia information.

### BACKGROUND

With development of smart terminals, the popularity of terminal applications increases and publishing an opening-screen advertisement in an application gradually becomes a commonly used way of publishing advertisements. The opening-screen advertisement is an advertisement presented on a start interface when the application starts.

Usually, an application server associated with the application acquires a plurality of opening-screen advertisements provided by advertisers and sets publishing policies for the opening-screen advertisements in advance. The application server can determine the opening-screen advertisement to be published in the application in accordance with the publishing policies, and the application on a terminal can call up an interface with the application server to download the opening-screen advertisement. When the application starts, the opening-screen advertisement can be presented.

A plurality of applications installed on the terminal can all present corresponding opening-screen advertisements by the abovementioned way without interfering with each other.

WO 2011/022808, US 2014/355955 A1 and US 2009/319375 A1 describe systems for displaying multimedia information on mobile devices of the prior art.

### SUMMARY OF THE INVENTION

In order to solve problems in related prior arts, the disclosure provides a method according to claim 1 and apparatus according to claim 8 and a computer program product according to claim 13 for presenting multimedia information. Further embodiments are provided in the dependent claims.

According to a first aspect of the present disclosure, there is provided a method for presenting multimedia information, the method comprising: upon detecting a start event of an application, determining multimedia information to be published in the application in accordance with publishing policies and a set of multimedia information that are preset, wherein the set of multimedia information comprises at least one piece of multimedia information; presenting the multimedia information in a start interface of the application.

In another embodiment, the method further comprises downloading the publishing policies and the set of multimedia information by calling up an interface with a server.

In another embodiment, the processing of determining multimedia information to be published in the application in accordance with publishing policies and a set of multimedia information that are preset comprises: when the publishing policies comprise a list of publishing applications, determining whether the list of publishing applications comprises the application; when the list of publishing applications comprises the application, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a publishing time period of the application, acquiring a system time currently indicated by a clock; determining whether the system time belongs to the publishing time period; when the system time belongs to the publishing time period, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a first publishing frequency, calculating a total publishing frequency on the basis of publishing frequencies of every application on a terminal, wherein the first publishing frequency is used to indicate the publishing frequency of the terminal; when the total publishing frequency is less than the first publishing frequency, determining the multimedia information to be published in the application in accordance with the publishing policies and the set of multimedia information.

In another embodiment, the processing of determining multimedia information to be published in the application in accordance with the publishing policies and the set of multimedia information comprises: when the publishing policies further comprise designated multimedia information corresponding to the application, acquiring the designated multimedia information corresponding to the application from the set of multimedia information.

In another embodiment, the method further comprises: when the publishing policies comprise a plurality of pieces of designated multimedia information corresponding to the application and second publishing frequencies of every piece of designated multimedia information, for every piece of designated multimedia information corresponding to the application, acquiring the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, taking the designated multimedia information as the multimedia information to be published in the application.

In another embodiment, the processing of determining multimedia information to be published in the application in accordance with the publishing policies and the set of multimedia information comprises: acquiring current weights of every piece of multimedia information in the set of multimedia information, wherein the weight is used to indicate a probability of selecting a corresponding piece of multimedia information; selecting the multimedia information to be published in the application from the set of multimedia information in the order of largest to least of the current weights of every piece of multimedia information.

In another embodiment, the method further comprises: upon detecting a viewing operation with respect to the multimedia information, displaying a detailed information page of the multimedia information; or upon detecting a sharing operation with respect to the multimedia information, transmitting a sharing request for the multimedia information to a server; or after the presenting of the multimedia information is finished, displaying a host interface of the application.

According to a second aspect of the present disclosure, there is provided an apparatus for presenting multimedia information, comprising: a determining module configured to, upon detecting a start event of an application, determine multimedia information to be published in the application in accordance with publishing policies and a set of multimedia information that are preset, wherein the set of multimedia information comprises at least one piece of multimedia information; a presenting module configured to present the multimedia information in a start interface of the application.

In another embodiment, the apparatus further comprises: a downloading module configured to download the publishing policies and the set of multimedia information by calling up an interface with a server.

In another embodiment, the determining module is further configured to determine whether a list of publishing applications comprises the application when the publishing policies comprise the list of publishing applications; and determine the multimedia information to be published in the application in accordance with the publishing policies and the set of multimedia information when the list of publishing applications comprises the application.

In another embodiment, the determining module is further configured to acquire a system time currently indicated by a clock when the publishing policies comprise a publishing time period of the application; determine whether the system time belongs to the publishing time period; and determine the multimedia information to be published in the application in accordance with the publishing policies and the set of multimedia information when the system time belongs to the publishing time period.

In another embodiment, the determining module is further configured to calculate a total publishing frequency on the basis of publishing frequencies of every application on a terminal when the publishing policies comprise a first publishing frequency, wherein the first publishing frequency is used to indicate the publishing frequency of the terminal; determine the multimedia information to be published in the application in accordance with the publishing policies and the set of multimedia information when the total publishing frequency is less than the first publishing frequency.

In another embodiment, the determining module is further configured to acquire designated multimedia information corresponding to the application from the set of multimedia information when the publishing policies further comprise the designated multimedia information corresponding to the application.

In another embodiment, the determining module is further configured to, when the publishing policies comprise a plurality of pieces of designated multimedia information corresponding to the application and second publishing frequencies of every piece of designated multimedia information, for every piece of designated multimedia information corresponding to the application, acquire the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, take the designated multimedia information as the multimedia information to be published in the application.

In another embodiment, the determining module is further configured to acquire current weights of every piece of multimedia information in the set of multimedia information, wherein the weight is used to indicate a probability of selecting a corresponding piece of multimedia information; select the multimedia information to be published in the application from the set of multimedia information in the order of largest to least of the current weights of every piece of multimedia information.

In another embodiment, the apparatus further comprises: the presenting module is further configured to display a detailed information page of the multimedia information upon detecting a viewing operation with respect to the multimedia information; or a transmitting module configured to transmit a sharing request for the multimedia information to a server upon detecting a sharing operation with respect to the multimedia information; or the presenting module is further configured to display a host interface of the application after the presenting of the multimedia information is finished.

According to a third aspect of the present disclosure, there is provided an apparatus for presenting multimedia information, comprising: a processor; a memory for storing instructions executable by the processor, wherein the processor is configured to: upon detecting a start event of an application, determine multimedia information to be published in the application in accordance with publishing policies and a set of multimedia information that are preset, wherein the set of multimedia information comprises at least one piece of multimedia information; present the multimedia information in a start interface of the application. According to a fourth aspect of the present disclosure, there is provided a computer program including instructions for executing the steps of the above methods when said program is executed by a computer.

The technical solutions provided by the embodiments of the present disclosure can achieve the following technical effects:

In an embodiment of the present disclosure, the method comprises: upon detecting a start event of the application, determining multimedia information to be published in the application in accordance with publishing policies and a set of multimedia information that are preset, wherein the set of multimedia information comprises at least one piece of multimedia information; presenting the multimedia information in a start interface of the application. By means of unified management on every installed application, upon detecting the start event of any application, the multimedia information to be published in the application is determined in accordance with the publishing policies and the set of multimedia information that are determined in advance, and the multimedia information is presented in the start interface of the application without downloading the multimedia information from application servers on an application-by-application basis, which avoids the same multimedia information being repeatedly downloaded and saves network resources and electric power of the terminal.

In another embodiment of the present disclosure, the method further comprises downloading the publishing policies and the set of multimedia information by calling up an interface with a server. The publishing policies and the set of multimedia information are set by the server only rather than by a plurality of application servers separately, and are downloaded by the terminal once rather than by every application separately, which avoids the same multimedia information being repeatedly downloaded and saves network resources and electric power of the terminal.

In another embodiment of the present disclosure, the processing of determining multimedia information to be published in the application in accordance with publishing policies and a set of multimedia information that are preset comprises: when the publishing policies comprise a list of publishing applications, determining whether the list of publishing applications comprises the application; when the list of publishing applications comprises the application, determining the multimedia information to be published in the application in accordance with the publishing policies and the set of multimedia information. The disclosure manages the applications in which the multimedia information is published by means of the list of publishing applications, so the requirement of publishing the multimedia information in a designated application can be satisfied and publishing the multimedia information in other applications can be avoided.

In another embodiment of the present disclosure, the processing of determining multimedia information to be published in the application in accordance with publishing policies and a set of multimedia information that are preset comprises: when the publishing policies comprise a publishing time period of the application, acquiring a system time currently indicated by a clock; determining whether the system time belongs to the publishing time period; when the system time belongs to the publishing time period, determining the multimedia information to be published in the application in accordance with the publishing policies and the set of multimedia information. By means of setting the publishing time period of the application, the disclosure can ensure that the multimedia information is published in the application within the publishing time period and is not published in the application outside the publishing time period, which avoids a user being disturbed outside the publishing time period.

In another embodiment of the present disclosure, the processing of determining multimedia information to be published in the application in accordance with publishing policies and a set of multimedia information that are preset comprises: when the publishing policies comprise a first publishing frequency, calculating a total publishing frequency on the basis of publishing frequencies of every application on a terminal; when the total publishing frequency is less than the first publishing frequency, determining the multimedia information to be published in the application in accordance with the publishing policies and the set of multimedia information. The disclosure limits the frequency of publishing the multimedia information on the terminal by setting the first publishing frequency, which prevents the user from becoming annoyed by excessive publishing of multimedia information.

In another embodiment of the present disclosure, the processing of determining multimedia information to be published in the application in accordance with the publishing policies and the set of multimedia information comprises: when the publishing policies further comprise designated multimedia information corresponding to the application, acquiring the designated multimedia information corresponding to the application from the set of multimedia information. When the publishing policies have already specified the designated multimedia information that is allowed to be published in the application, the designated multimedia information is taken as the multimedia information to be published in the application.

In another embodiment of the present application, the method further comprises: when the publishing policies comprise a plurality of pieces of designated multimedia information corresponding to the application and second publishing frequencies of every piece of designated multimedia information, for every piece of designated multimedia information corresponding to the application, acquiring the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, taking the designated multimedia information as the multimedia information to be published in the application. When the publishing policies have already specified the plurality of pieces of designated multimedia information that are allowed to be published in the application, the multimedia information to be published in the application is selected in accordance with the publishing frequencies of the plurality of pieces of designated multimedia information.

In another embodiment of the present disclosure, the processing of determining multimedia information to be published in the application in accordance with the publishing policies and the set of multimedia information comprises: acquiring current weights of every piece of multimedia information in the set of multimedia information, wherein the weight is used to indicate a probability of selecting a corresponding piece of multimedia information; selecting the multimedia information to be published in the application from the set of multimedia information in the order of largest to least of the current weights of every piece of multimedia information. By means of setting weights of the plurality of pieces of multimedia information, the disclosure selects the multimedia information whose weight is larger to publish, rather than randomly selecting the multimedia information, which can evenly publish respective pieces of multimedia information and prevent a certain piece of multimedia information being published frequently and another piece of multimedia information being published rarely, and thus improve reliability.

In another embodiment, the method further comprises: upon detecting a viewing operation with respect to the multimedia information, displaying a detailed information page of the multimedia information; or upon detecting a sharing operation with respect to the multimedia information, transmitting a sharing request for the multimedia information to a server; or after the presenting of the multimedia information is finished, displaying a host interface of the application. After the disclosure publishes the multimedia information, the user can perform the viewing operation and the sharing operation with respect to the multimedia information, which increases flexibility and user viscosity of the multimedia information, and achieves the effect of propagating the multimedia information.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for presenting multimedia information, according to an exemplary embodiment.
Fig. 2 is a flow chart showing a method for presenting multimedia information, according to an exemplary embodiment.
Fig. 3 is a structure diagram showing a network system, according to an exemplary embodiment.
Fig. 4 is a diagram showing an operation flow, according to an exemplary embodiment.
Fig. 5 is a block diagram showing an apparatus for presenting multimedia information, according to an exemplary embodiment.
Fig. 6 is a block diagram showing an apparatus for presenting multimedia information, according to an exemplary embodiment.

### DETAILED DESCRIPTION

In order to make objectives, technical solutions, and advantages of the present disclosure clearer, the present disclosure is further described in detail below in conjunction with implementations and accompanying drawings. The exemplary embodiments and descriptions in the present disclosure are used to explain the present disclosure, and are not intended to limit the present disclosure.

The embodiments of the present disclosure provide a method and apparatus for presenting multimedia information. Below, the present disclosure is described in detail in conjunction with the accompanying drawings.

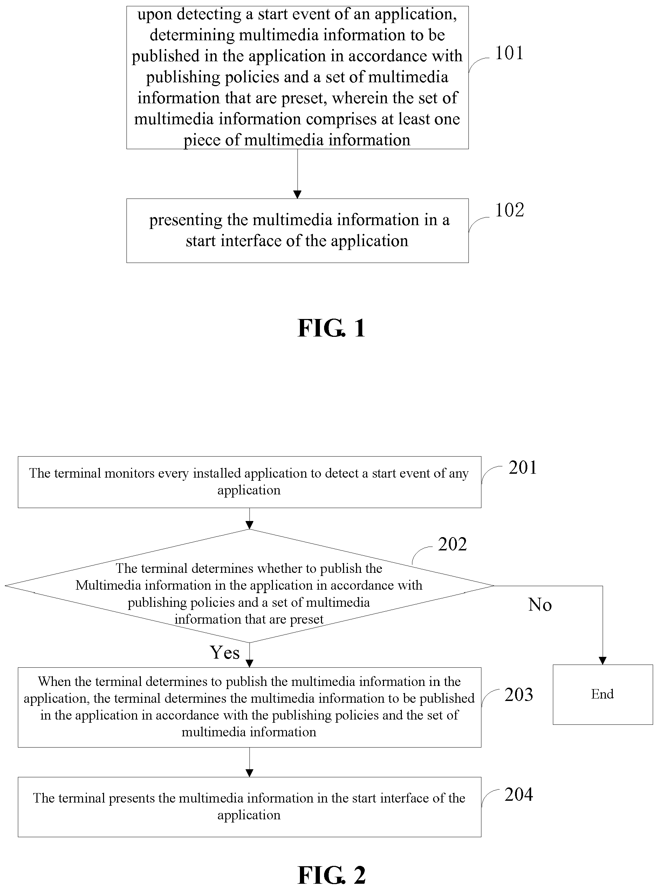

Fig. 1 is a flow chart showing a method for presenting multimedia information according to an exemplary embodiment. As shown in Fig. 1, the method for presenting multimedia information is used in a terminal and includes the following steps:
In step 101, when a start event of an application is detected, multimedia information to be published in the application is determined in accordance with publishing policies and a set of multimedia information that are preset, wherein the set of multimedia information comprises at least one piece of multimedia information.

The terminal can install at least one application, and the terminal can monitor every application. Once any application starts, the terminal can detect the start event of the application.

In step 102, the multimedia information is presented in a start interface of the application.

In related prior arts, respective applications on the terminal are associated with different application servers, respectively. For every application, the application server associated with the application is required to set the publishing policies for the multimedia information and determine the multimedia information to be published in the application in accordance with the publishing policies, and the terminal is required to download the multimedia information from the application server via the application, wherein the downloading will consume network resources and electric power of the terminal. Every application on the terminal will download the multimedia information in the above way. Even if any two different applications on the terminal acquire the same multimedia information, the terminal is required to download the multimedia information from different application servers via the two different applications respectively, which causes the same multimedia information to be repeatedly downloaded and thus wastes the network resources and the electric power of the terminal.

In the embodiment, the terminal implements unified management on every application installed thereon. The terminal sets the publishing policies and the set of multimedia information in advance, and monitors every application when it is in operation. Upon detecting the start event of any application, the terminal publishes the multimedia information in the application. The terminal downloads the publishing policies and the set of multimedia information once, and it is unnecessary for every application to download the multimedia information from the application servers separately, which avoids the same multimedia information being repeatedly downloaded and thus saves the network resources and the electric power of the terminal.

In the method provided by the embodiment, by means of unified management on every installed application, upon detecting the start event of any application, the multimedia information to be published in the application is determined in accordance with the publishing policies and the set of multimedia information that are determined in advance, and the multimedia information is presented in the start interface of the application without downloading the multimedia information from the application servers on an application-by-application basis, which avoids the same multimedia information being repeatedly downloaded and saves the network resources and the electric power of the terminal.

In another embodiment, the method further comprises: downloading the publishing policies and the set of multimedia information by calling up an interface with a server.

In another embodiment, the processing of determining multimedia information to be published in the application in accordance with publishing policies and a set of multimedia information that are preset comprises: when the publishing policies comprise a list of publishing applications, determining whether the list of publishing applications comprises the application; when the list of publishing applications comprises the application, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a publishing time period of the application, acquiring a system time currently indicated by a clock; determining whether the system time belongs to the publishing time period; when the system time belongs to the publishing time period, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a first publishing frequency, calculating a total publishing frequency on the basis of publishing frequencies of every application on the terminal, wherein the first publishing frequency is used to indicate the publishing frequency of the terminal; when the total publishing frequency is less than the first publishing frequency, determining the multimedia information to be published in the application in accordance with the publishing policies and the set of multimedia information.

In another embodiment, the processing of determining multimedia information to be published in the application in accordance with the publishing policies and the set of multimedia information comprises: when the publishing policies further comprise designated multimedia information corresponding to the application, acquiring the designated multimedia information corresponding to the application from the set of multimedia information.

In another embodiment, the method further comprises: when the publishing policies comprise a plurality of pieces of designated multimedia information corresponding to the application and second publishing frequencies of every piece of designated multimedia information, for every piece of designated multimedia information corresponding to the application, acquiring the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, taking the designated multimedia information as the multimedia information to be published in the application.

In another embodiment, the processing of determining multimedia information to be published in the application in accordance with the publishing policies and the set of multimedia information comprises: acquiring current weights of every piece of multimedia information in the set of multimedia information, wherein the weight is used to indicate a probability of selecting a corresponding piece of multimedia information; selecting the multimedia information to be published in the application from the set of multimedia information in the order of largest to least of the current weights of every piece of multimedia information.

In another embodiment, the method further comprises: upon detecting a viewing operation with respect to the multimedia information, displaying a detailed information page of the multimedia information; or upon detecting a sharing operation with respect to the multimedia information, transmitting a sharing request for the multimedia information to the server; or after the presenting of the multimedia information is finished, displaying a host interface of the application.

All of the above alternative technical solutions can be combined to form alternative embodiments of the present disclosure, which are not redundantly described herein.

Fig. 2 is a flow chart showing a method for presenting multimedia information according to an exemplary embodiment. As shown in fig. 2, the method for presenting multimedia information is used in a terminal and comprises the following steps:
In step 201, the terminal monitors every installed application to detect a start event of any application.

The terminal can be a mobile phone, a computer, a tablet computer and so on, and the terminal can install at least one application such as a chat application, a shopping application, and a video playing application and so on, which are not limiting in the embodiment.

In operation, the terminal can monitor every application installed thereon. When the start event of any application occurs, the terminal can detect the start event of the application, and publish multimedia information in the application, i.e. take the multimedia information as an opening-screen advertisement of the application.

The start event can be triggered by a user operation of starting the application, and the user operation of starting the application can be a click operation on an icon of the application, or a selecting operation on the application in a start menu, which are not limiting in the embodiment.

In step 202, the terminal determines whether to publish multimedia information in the application in accordance with publishing policies and a set of multimedia information that are preset. If so, then the method continues to step 203, or else the method ends.

The publishing policies are used to manage the publishing of the multimedia information, for example, manage publishing time of the multimedia information, manage the application in which the multimedia information is to be published and so on, which are not limiting in the embodiment. The publishing policies are separate from the applications. The set of multimedia information comprises at least one piece of multimedia information. From the viewpoint of format, each piece of multimedia information can comprise at least one of picture information, video information, audio information and a webpage link address; and from the viewpoint of content, the multimedia information can comprise information about cosmetics, clothes, commodities and so on, which are not limiting in the embodiment.

The publishing policies and the set of multimedia information can be determined by a server associated with the terminal by means of negotiating with advertisers who generate the multimedia information. The server can further update the publishing policies and the set of multimedia information in operation. The terminal can download the publishing policies and the set of multimedia information from the server and save the publishing policies and the set of multimedia information.

For example, the terminal downloads the publishing policies and the set of multimedia information by calling up an interface with the server. The terminal can call up the interface with the server and download the publishing policies and the set of multimedia information in real time, or periodically call up the interface with the server and download the publishing policies and the set of multimedia information, wherein the download cycle of the terminal can be 10 hours, 24 hours and so on, which is not limiting in the embodiment.

Alternatively, if the server has already updated the publishing policies and the set of multimedia information, the terminal can also download the publishing policies and the set of multimedia information that have already been updated. For example, the server can generate a new publishing data file and version information of the publishing data file on the basis of the publishing policies and the set of the multimedia information that have already been updated, wherein the version information can comprise a version name, generating time and so on of the publishing data file. The terminal can acquire the version information, and determine whether the version information is the same as that of the publishing data file currently saved by the terminal. If the terminal determines that the version information is different from that currently saved by itself, which indicates that the server has already updated the publishing data file, then the terminal calls up the interface with the server, downloads and interprets the updated publishing data file, and acquires the publishing policies and the set of multimedia information that have already been updated.

In addition, the terminal can not only download the publishing policies and the set of multimedia information at the same time, but also separately download the publishing policies and the set of multimedia information. For example, the server can generate a publishing policy file on the basis of the publishing policies that are set, and generate a publishing information file on the basis of the set of multimedia information that is set. When the server updates the publishing policy file, the terminal can download the updated publishing policy file from the server, interpret the publishing policy file and then acquire the updated publishing policies. Meanwhile, the terminal can manage the set of multimedia information that is currently saved in accordance with the updated publishing policies. Alternatively, when the server updates the publishing information file, the terminal can download the updated publishing information file from the server, interpret the publishing information file, and then acquire the set of updated multimedia information. Meanwhile, the terminal can manage the set of updated multimedia information in accordance with the publishing policies that are currently saved.

In the embodiment, upon detecting the start event of the application, the terminal can determine whether to publish the multimedia information in the application in accordance with the publishing policies and the set of multimedia information that are currently saved. For example, step 202 can comprise at least one of the following steps (1) to (3):
(1) When the publishing policies comprise a list of publishing applications, it is determined whether the list of publishing applications comprises the application. If so, the method continues to step 203, or else the method ends.
   The publishing polices can comprise the list of publishing applications, which comprises at least one application in which the multimedia information is allowed to be published. The terminal can determine whether the list of publishing applications comprises the application. When the list of publishing applications comprises the application, which indicates that it is allowed to publish the multimedia information in the application, the terminal continues to step 203; when the list of publishing applications does not comprise the application, which indicates that it is not allowed to publish the multimedia information in the application, the terminal does not publish the multimedia information in the application.
(2) When the publishing policies comprise a publishing time period of the application, a system time currently indicated by a clock is acquired, and it is determined whether the system time belongs to the publishing time period. If so, the method continues to step 203, or else the method ends.
   The publishing policies can further comprise publishing time periods of every application, wherein the publishing time period is used to specify a time period in which it is allowed to publish the multimedia information in a corresponding application. The publishing time periods of different applications can be the same or different, which is not limiting in the embodiment.
   The terminal can acquire the publishing time period of the application and the system time currently indicated by the clock, and determine whether the system time belongs the publishing time period. When the system time belongs to the publishing time period, which indicates that it is allowed to publish the multimedia information in the application currently, the terminal continues to step 203. When the system time does not belong to the publishing time period, which indicates that it is not allowed to publish the multimedia information currently, the terminal does not publish the multimedia information in the application.
(3) When the publishing policies comprise a first publishing frequency, a total publishing frequency is calculated on the basis of publishing frequencies of every application on the terminal, and it is determine whether the total publishing frequency is less than the first publishing frequency. If so, the method continues to step 203, or else the method ends.

In practice, the terminal publishes the multimedia information in a plurality of applications, and if the publishing frequency is too high, the user will become annoyed and user experience will be affected. Therefore, the publishing policies can comprise the first publishing frequency, which is used to indicate the publishing frequency of the terminal, and the frequency of the terminal publishing the multimedia information can be limited.

In the process of publishing the multimedia information, the terminal can generate a publishing record, which comprises the multimedia information that has been published by every application. When determining whether to publish the multimedia information in a currently starting application, the terminal can acquire the publishing frequencies of every application, and calculate the total publishing frequency of the terminal on the basis of the publishing frequencies of every application on the terminal, and determine whether the total publishing frequency of the terminal is less than the first publishing frequency. When the total publishing frequency is less than the first publishing frequency, which indicates that the total publishing frequency of the terminal does not exceed a specified largest publishing frequency, the terminal can further publish the multimedia information in the application and the terminal continues to step 203. When the total publishing frequency is not less than the first publishing frequency, which indicates that the frequency of the terminal publishing the multimedia information is too high, the terminal cannot publish the multimedia information in the application.

The publishing frequency of the application can be represented by a count of publishing times within a preset time period, wherein the preset time period can be determined as one day, one week and so on in accordance with the publishing policies, which is not limiting in the embodiment. For example, if the preset time period is one day, and an application has already been published three times on the same day, then the publishing frequency of the application is 3.

It should be appreciated that the embodiment is described by taking the three options in the above steps (1) - (3) as examples, and the terminal can determine whether to publish the multimedia information in the application by any one or more of the abovementioned options. In practice, the terminal can combine any two or three of the abovementioned options to determine whether to publish the multimedia information in the application.

Taking the combination of the abovementioned steps (1) - (2) as an example, when the publishing policies comprise the list of publishing applications, the terminal determines whether the list of publishing applications comprises the application, acquires the publishing time period of the application if the list of publishing applications comprises the application, acquires the system time currently indicated by the clock and determines whether the system time belongs to the publishing time period. If the system time belongs to the publishing time period, the terminal determines to publish the multimedia information in the application and continues to step 203. If the list of publishing applications does not comprise the application or the system time does not belong to the publishing time period, the terminal does not publish the multimedia information in the application.

Furthermore, the terminal can employ other ways to determine whether to publish the multimedia information in the application, which are not limiting in the embodiment.

The embodiment is described by taking the following case as an example: upon determining that it is not required to publish the multimedia information in the application, the terminal does not implement any further operation. In practice, upon determining that it is not required to publish the multimedia information in the application, the terminal implements a corresponding start operation via the application, for example, displaying a host interface of the application, loading user record information in the application and so on, which is not redundantly described herein.

In step 203, when the terminal determines to publish the multimedia information in the application, the terminal determines the multimedia information to be published in the application in accordance with the publishing policies and the set of multimedia information.

Upon determining to publish the multimedia information in the application, the terminal can select the multimedia information to be published in the application from the set of multimedia information.

In the embodiment, the publishing policies can comprise designated multimedia information corresponding to every application. That is, the publishing policies can specify the multimedia information to be published in a corresponding application in advance. The terminal can only publish corresponding designated multimedia information in the application, and cannot publish any other multimedia information. The designated multimedia information corresponding to every application can be determined by the advertiser providing the multimedia information, or by a producer of the terminal, or by the advertiser by means of negotiating with the producer of the terminal, which are not limiting in the embodiment.

Upon determining whether to publish the multimedia information in the application, the terminal determines whether the publishing policies comprise the designated multimedia information corresponding to the application. If so, the terminal acquires the designated multimedia information corresponding to the application from the set of multimedia information so as to publish the designated multimedia information in the application. For example, the publishing policies can comprise a memory address of the designated multimedia information corresponding to the application, and the terminal can acquire the designated multimedia information in accordance with the memory address.

When the publishing policies comprise a plurality of pieces of designated multimedia information corresponding to the application, the terminal can acquire the plurality of pieces of designated multimedia information so as to publish the plurality of pieces of designated multimedia information in the application.

The terminal can further determine whether to publish one of the plurality of pieces of designated multimedia information in accordance with the publishing frequencies of every piece of designated multimedia information in the plurality of pieces of designated multimedia information, wherein the publishing frequency is used to indicate the count of times the designated multimedia information has already been published.

For example, the terminal can calculate the publishing frequencies of every piece of designated multimedia information, select the designated multimedia information whose publishing frequency is the least, from the plurality of pieces of multimedia information as the multimedia information to be published in the application. Alternatively, the publishing policies can further comprise second publishing frequencies of every piece of designated multimedia information, wherein the second publishing frequency is used to indicate the publishing frequency of a corresponding piece of designated multimedia information, and the publishing frequency of a corresponding piece of designated multimedia information can be limited. For every piece of designated multimedia information corresponding to the application, the terminal can acquire the publishing frequency of the designated multimedia information, and determine whether the publishing frequency is less than the second publishing frequency of the designated multimedia information. If the publishing frequency is less than the second publishing frequency of the designated multimedia information, which indicates that the publishing frequency of the designated multimedia information does not exceed a specified largest publishing frequency, the designated multimedia information can be published and is taken as the multimedia information to be published in the application. If the publishing frequency is not less than the second publishing frequency of the designated multimedia information, which indicates that the frequency of the terminal publishing the designated multimedia information is too high, the designated multimedia information cannot be published.

It should be appreciated that the publishing frequency of the designated multimedia information can be the publishing frequency of the designated multimedia information in all multimedia information of the set of multimedia information, i.e. the publishing frequency of the designated multimedia information in the terminal. Specifically, the publishing frequency is a quotient of the count of the publishing times of the designated multimedia information and the total count of the publishing times of the multimedia information published by the terminal.

Alternatively, the publishing frequency of the designated multimedia information can also be the publishing frequency of the designated multimedia information in the plurality of pieces of designated multimedia information corresponding to every application. That is, for every application in which it is allowed to publish the designated multimedia information, the publishing frequency of the designated multimedia information is used to indicate the publishing frequency of the designated multimedia information in the application. Specifically, the publishing frequency is a quotient of the count of publishing times of the designated multimedia information in the application and the total count of publishing times of the application.

In the embodiment, the terminal can also determine current weights of every piece of multimedia information in the set of multimedia information without designating the designated multimedia information to be published in the application, and select the multimedia information to be published in the application from the set of multimedia information in the order of largest to least of the current weights of every piece of multimedia information.

Furthermore, when selecting the multimedia information, the terminal can select a piece of multimedia information from the set of multimedia information in the order of largest to least of the current weights of every piece of multimedia information, i.e. select the multimedia information whose weight is the largest. The terminal can also select a predetermined number of pieces of multimedia information from the set of multimedia information, i.e. select the predetermined number of pieces of multimedia information whose weights are larger, wherein the predetermined number can be determined in accordance with the publishing policies, and predetermined numbers corresponding to different applications can be the same or different, which is not limiting in the embodiment.

The weight is used to indicate the probability of selecting a corresponding piece of multimedia information, and the weights of every piece of multimedia information can belong to a predetermined range, for example, between 0 and 1, or between 0 and 10. A sum of the weights of the plurality of pieces of multimedia information can be 1 or another value, which is not limiting in the embodiment. The weights of every piece of multimedia information can be determined by the terminal in accordance with the publishing policies, and updated by the terminal when they are applied.

For example, upon publishing a piece of multimedia information in an application, the terminal can decrease the weight of the multimedia information, such that when another application starts later, the terminal will not publish the multimedia information whose weight is decreased and will publish another multimedia information having a larger weight. By means of decreasing the weight of the multimedia information that has already been published and increasing the weight of the multimedia information that has not been published, respective pieces of multimedia information can be evenly published and the case that one piece of multimedia information is published frequently and another piece of multimedia information is published rarely can be avoided.

Alternatively, upon detecting the start event of the application, the terminal acquires the type of the application. When the terminal determines that the type of a piece of multimedia information in the set of multimedia information is the same as that of the application, the terminal increases the weight of the multimedia information so as to improve the probability of selecting the multimedia information. For example, when the application, the start event of which occurs, is a video playing application, the terminal can increase the weight of the multimedia information, the type of which is cinema, in the set of multimedia information.

Of course, when the terminal determines that the type of the multimedia information is the same as that of the application, the terminal can also directly select the multimedia information and determine to publish the multimedia information in the application without selecting in accordance with the weight of the multimedia information. The embodiment is not limiting with respect to the way in which the terminal selects the multimedia information.

In step 204, the terminal presents the multimedia information in the start interface of the application.

Upon determining the multimedia information to be published in the application, the terminal can display the start interface of the application and presents the multimedia information in the start interface. For example, when the multimedia information comprises picture information, the terminal displays the picture information in the start interface; when the multimedia information is video information, the terminal plays the video information in the start interface.

When the terminal has determined a piece of multimedia information to be published in the application, the terminal presents the multimedia information in the start interface. When the terminal has determined the plurality of pieces of multimedia information to be published in the application, the terminal presents the plurality of pieces of multimedia information in turn in the start interface; or presents the plurality of pieces of multimedia information at the same time in the start interface. Alternatively, the terminal can also assign the plurality of pieces of multimedia information into two groups, each of which comprise multiple pieces of multimedia information, and firstly present a group of multimedia information and then present another group of multimedia information in the start interface. The way of presenting the plurality of pieces of multimedia information can be determined in accordance with the publishing policies, and is not limiting in the embodiment.

In practice, when the application starts, the terminal displays the host interface of the application via the application. In the embodiment, the terminal can display the start interface and then present the multimedia information in the start interface. When the terminal presents the multimedia information, if the user does not trigger any operation on the multimedia information, the terminal displays the host interface of the application after the presenting of the multimedia information is finished.

When the duration of presenting the multimedia information reaches a predetermined duration, it can be determined that the presenting of the multimedia information is finished. The predetermined duration can be determined in accordance with the publishing policies, predetermined durations corresponding to different multimedia information can be the same or different, and predetermined durations corresponding to different applications can be the same or different, which are not limiting in the embodiment.

In the embodiment, the terminal can firstly display the start interface without displaying the host interface of the application, and then display the host interface after the presenting of the multimedia information is finished. Alternatively, the terminal can display the host interface of the application via the application and display the start interface on the top layer of the host interface, so as to cover the host interface of the application with the start interface and present the multimedia information in the start interface. After the presenting of the multimedia information is finished, the terminal cancels the display of the start interface; meanwhile the terminal can display the host interface. The embodiment is not limiting as to whether to display the host interface while the multimedia information is presented.

When the terminal presents the multimedia information, the user can trigger a viewing operation on the multimedia information, wherein the viewing operation can be an operation of clicking the multimedia information or another operation, which is not limiting in the embodiment. Upon detecting the viewing operation on the multimedia information, the terminal can display a detailed information page of the multimedia information. In a subsequent process, the terminal can display the host interface of the application upon closing the detailed information page.

The detailed information page can comprise detailed information of the multimedia information, for example, a brand, a price, a producer and so on of the product indicated by the multimedia information. The embodiment is not limiting with respect to the detailed information. The detailed information page can be downloaded in advance by the terminal from the server, or from a server corresponding to the multimedia information. For example, when the multimedia information is a webpage link address, the terminal transmits an access request to a server corresponding to the webpage link address in accordance with the webpage link address, and receives a webpage returned from the server, wherein the webpage is the detailed information page of the multimedia information.

When the terminal presents the multimedia information, the user can also trigger a sharing operation on the multimedia information. For example, the start interface can comprise a sharing option, and the sharing operation can be an operation of clicking the sharing option. When the terminal detects the sharing operation on the multimedia information, the terminal transmits a sharing request for the multimedia information to the server. When the server receives the sharing request, it issues a message sharing the multimedia information, so that friends of the terminal can view the message and learn that the terminal has already shared the multimedia information. Moreover, upon transmitting the sharing request to the server, the terminal can display the host interface of the application.

In addition, upon finishing the presenting of the multimedia information, the terminal can update the generated publishing record by adding a corresponding relationship between the application and the multimedia information in the publishing record to indicate that the multimedia information has already been published in the application. Furthermore, the terminal can also add the time indicating when the application presents the multimedia information, the operation of the user triggering the multimedia information and so on in the publishing record, which is not limiting in the embodiment. Then, the terminal can transmit the publishing record to the server for saving.

Upon downloading the publishing policies and the set of multimedia information, in the case that the terminal disconnects network connection with the server, the terminal can also publish the multimedia information in the application and generate the publishing record, the whole process of which is implemented off-line without connecting to network. In a subsequent process, when the terminal restores the network connection with the server, the terminal transmits the publishing record to the server.

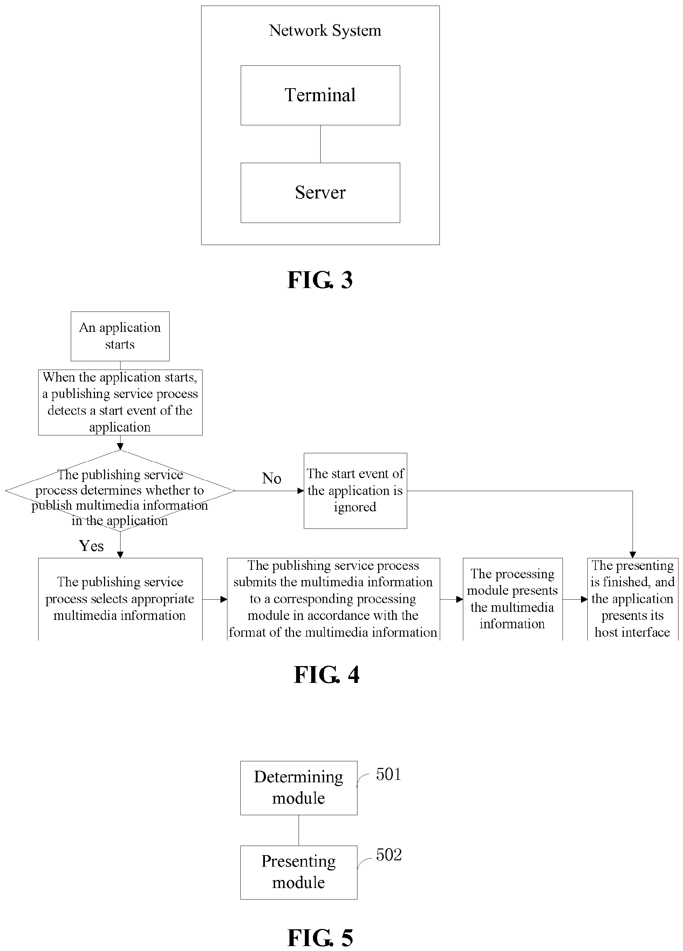

Fig. 3 is a structure diagram of a network system provided by the embodiment. As shown in fig. 3, the network system comprises a terminal and a server, wherein the terminal connects with the server via a network, and the server is used to provide services for the terminal. The server can set publishing policies and acquire a set of multimedia information. The terminal can call up an interface with the server, download the publishing policies and the set of multimedia information from the server, and publish multimedia information in a starting application in accordance with the publishing policies and the set of multimedia information.

It should be appreciated that the embodiment is described by taking the case that the method for presenting multimedia information is implemented by the terminal as an example. In practice, the terminal can execute a publishing service process, and the method for presenting multimedia information is implemented by the publishing service process. As shown in fig. 4, an operating flow of the publishing service process can comprise:
(1) The publishing service process monitors start events and close events of every application, and when an application starts, detects a start event of the application.
(2) The publishing service process determines whether to publish multimedia information in the application and, if so, selects appropriate multimedia information from a plurality of pieces of multimedia information that are acquired in advance.
   The publishing service process can download the publishing policies and the multimedia information from the server, and determine whether to publish the multimedia information in the application in accordance with the publishing policies. If the publishing service process determines not to publish the multimedia information in the application, it ignores the start event of the application and the application can present a host interface thereof. If the publishing service determines to publish the multimedia information in the application, it selects appropriate multimedia information.
(3) Upon determining the multimedia information to be published in the application, the publishing service process submits the multimedia information to a processing module corresponding to the format of the multimedia information in accordance with the format of the multimedia information, such that the multimedia information is presented by the processing module.
   The multimedia information determined by the publishing service process can be information of multiple formats, such as picture information, video information, and audio information and so on. The publishing service process can determine the format of the multimedia information and submit the multimedia information to the processing module corresponding to the format, such that the multimedia information is presented by the processing module.
   For example, when the multimedia information is the picture information, the publishing service process submits the picture information to a display module for displaying; when the multimedia information is the video information, the publishing service process submits the video information to a video player module for playing.
(4) After the presenting of the multimedia information is finished, the application presents the host interface thereof.

In the method provided by the embodiment, by means of unified management on every installed application, upon detecting the start event of any application, the multimedia information to be published in the application is determined in accordance with the publishing policies and the set of multimedia information that are determined in advance, so the multimedia information is presented in the start interface of the application without downloading the multimedia information from application servers on an application-by-application basis, which avoids the same multimedia information being repeatedly downloaded and saves the network resources and the electric power of the terminal.

In related prior arts, a plurality of application servers set the publishing policies separately, and every application individually downloads advertisement resources from a corresponding server. In practice, it is required for the producer of the application to negotiate with an advertiser in accordance with its own requirements, and the advertiser determines whether to publish an opening-screen advertisement in accordance with the quantity of users of the application. Once the advertiser determines to publish the opening-screen advertisement in the application, the application server is required to integrate data packages of the opening-screen advertisements provided by the advertiser and configure several publishing policies to manage the opening-screen advertisements to be published. The application on the terminal is required to call up a corresponding interface to acquire the opening-screen advertisement so as to present the opening-screen advertisement. It is quite complicated and tedious to configure the application server, and the application on the terminal is required to acquire latest resources from the server. If the application on the terminal communicates with the application server too frequently, a large amount of network resources and electric power of the terminal will be consumed. It is difficult to find an appropriate advertiser for some applications, the quantity of users of which is relatively less, so the publishing of the opening-screen advertisement cannot be implemented. Furthermore, respective applications on the terminal operate separately, and cannot be managed in a unified way.

The network system of the embodiment comprises the terminal and only one server, and the publishing policies and the advertisement resources are required to be downloaded by the terminal from the server once so as to publish the opening-screen advertisements in different applications. That is to say, unified management of a plurality of applications is implemented, and the terminal can upgrade and update the publishing policies and the advertisement resources by periodically acquiring version information from the server. It is unnecessary for every application to individually download the advertisement resources from the application server, so repeated downloading of the same advertisement resources and a corresponding waste of the network resources and electric power are avoided, and the network resources and the electric power of the terminal is saved. The terminal further provides corresponding publishing polices such as time period control policies, frequency control policies and so on, in order to be responsible for the user experience of the whole terminal. Furthermore, the server of the terminal is required to configure a copy of publishing policies and advertisement resources, and it is unnecessary for the application server to configure the publishing policies and the advertisement resources again, so the operation of the application server is simplified.

The disclosure provides a system-level platform for presenting the opening-screen advertisement on the terminal, and the producer of the terminal can negotiate with advertisers to automatically present an appropriate opening-screen advertisement when a specific application starts. Regardless of the quantity of users of an application, as long as the advertiser reaches an agreement with the producer of the terminal, the opening-screen advertisement can be published and the same publishing effect as related prior art can be achieved without configuring the application server, calling up any publishing policy and interface, and periodically acquiring any advertisement resource from the application server. Furthermore, the application server can further gain a reward sharing from the producer of the terminal.

Fig. 5 is a block diagram showing an apparatus for presenting multimedia information in accordance with an exemplary embodiment. As shown in fig. 5, the apparatus comprises a determining module 501 and a presenting module 502.

The determining module 501 is configured to, upon detecting a start event of an application, determine multimedia information to be published in the application in accordance with publishing policies and a set of multimedia information that are preset, wherein the set of multimedia information comprises at least one piece of multimedia information; the presenting module 502 is configured to present the multimedia information in a start interface of the application.

In the apparatus provided by the embodiment, by means of unified management of every installed application, upon detecting the start event of any application, the multimedia information to be published in the application is determined in accordance with the publishing policies and the set of multimedia information that are determined in advance, so the multimedia information is presented in the start interface of the application without downloading the multimedia information from the application servers on an application-by-application basis, which avoids the same multimedia information being repeatedly downloaded and saves the network resources and the electric power of the terminal.

In another embodiment, the apparatus further comprises a downloading module configured to download the publishing policies and the set of multimedia information by calling up an interface with a server.

In another embodiment, the determining module 501 is further configured to determine whether a list of publishing applications comprises the application when the publishing policies comprise the list of publishing applications; and determine the multimedia information to be published in the application in accordance with the publishing policies and the set of multimedia information when the list of publishing applications comprises the application.

In another embodiment, the determining module 501 is further configured to acquire a system time currently indicated by a clock when the publishing policies comprise a publishing time period of the application; determine whether the system time belongs to the publishing time period; and determine the multimedia information to be published in the application in accordance with the publishing policies and the set of multimedia information when the system time belongs to the publishing time period.

In another embodiment, the determining module 501 is further configured to calculate a total publishing frequency on the basis of publishing frequencies of every application on a terminal when the publishing policies comprise a first publishing frequency, wherein the first publishing frequency is used to indicate the publishing frequency of the terminal; determine the multimedia information to be published in the application in accordance with the publishing policies and the set of multimedia information when the total publishing frequency is less than the first publishing frequency.

In another embodiment, the determining module 501 is further configured to acquire designated multimedia information corresponding to the application from the set of multimedia information when the publishing policies further comprise the designated multimedia information corresponding to the application.

In another embodiment, the determining module 501 is further configured to, when the publishing policies comprise a plurality of pieces of designated multimedia information corresponding to the application and second publishing frequencies of every piece of designated multimedia information, for every piece of designated multimedia information corresponding to the application, acquire the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, take the designated multimedia information as the multimedia information to be published in the application.

In another embodiment, the determining module 501 is further configured to acquire current weights of every piece of multimedia information in the set of multimedia information, wherein the weight is used to indicate a probability of selecting a corresponding piece of multimedia information; select the multimedia information to be published in the application from the set of multimedia information in the order of largest to least of the current weights of every piece of multimedia information.

In another embodiment, the apparatus further comprises: the presenting module 502 is further configured to display a detailed information page of the multimedia information upon detecting a viewing operation with respect to the multimedia information; or a transmitting module configured to transmit a sharing request for the multimedia information to a server upon detecting a sharing operation with respect to the multimedia information; or the presenting module 502 is further configured to display a host interface of the application after the presenting of the multimedia information is finished.

In the apparatus of above embodiments, specific operations of respective modules have already been described in detail in the process embodiments and thus are not detailed described herein.

All the above alternative technical solutions can be combined to form alternative embodiments of the application, which are not redundantly described herein.

It should be appreciated that the apparatus for presenting multimedia information provided by the above embodiments is described by taking the above division of respective function modules as an example. In practice, the above functions can be implemented by different modules as actually required, that is, the internal structure of the terminal is divided into different function modules to implement all or some of the above described functions. Furthermore, the apparatus for presenting multimedia information provided by the above embodiments belongs to the same technical concept as the method for presenting multimedia information, and the specific implementations of the apparatus are not redundantly described herein. Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

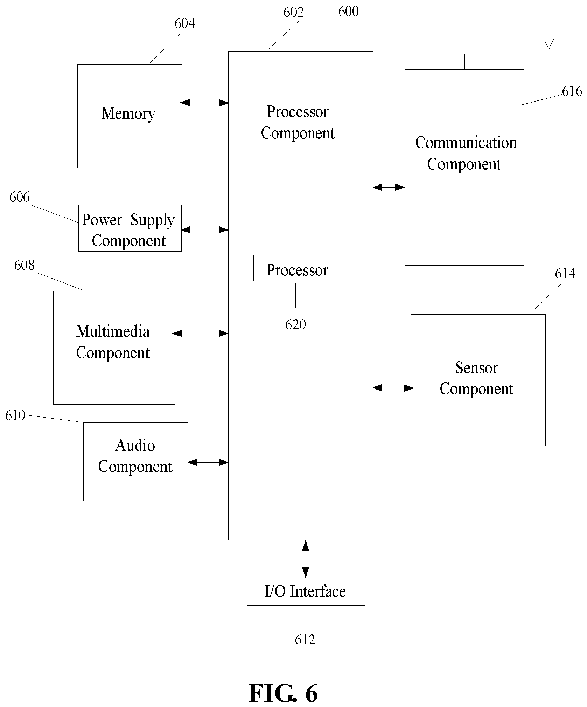

Fig. 6 is a block diagram showing an apparatus 600 for presenting multimedia information in accordance with an exemplary embodiment. For example, the apparatus 600 can be a mobile phone, a computer, a digital broadcast terminal, a message transceiver, a game console, a tablet device, medical equipment, a fitness facility, a personal digital assistant and so on.

As shown in fig. 6, the apparatus 600 can comprise one or more of a processor component 602, a memory 604, a power supply component 606, a multimedia component 608, an audio component 610, an input/output (I/O) interface 612, a sensor component 614, and a communication component 616.

The processor component 602 usually controls operations of the whole apparatus 600, for example, operations related to display, telephone call, data communication, camera operation and recording operation and so on. The processor component 602 can comprise one or more processors 620 to execute instructions so as to implement all or part of the steps of the above methods. Moreover, the processor component 602 can comprise one or more modules for facilitating interactions between the processor component 602 and other components. For example, the processor component 602 can comprise a multimedia module for facilitating interactions between the multimedia component 608 and the processor component 602.

The memory 604 is configured to store various types of data for supporting operations of the apparatus 600. Examples of the data comprise instructions of any application program or method operating on the apparatus 600, contact data, directory data, messages, pictures, videos and so on. The memory 604 can be implemented by any type of volatile or non-volatile storages or the combination thereof, for example, Static Random Access Memories (SRAMs), Electrically Erasable Programmable Read-Only Memories (EEPROMs), Erasable Programmable Read-Only Memories (EPROMs), Programmable Read-Only Memories (PROMs), Read-Only Memories (ROMs), magnetic memories, flash memories, magnetic disks or optical disks.

The power supply component 606 supplies power for various components of the apparatus 600. The power supply component 606 can comprise a power supply management system, one or more power supplies, and other components associated with power generation, management and assignment for the apparatus 600.

The multimedia component 608 comprises a screen for providing an output interface between the apparatus 600 and the user. In some embodiments, the screen can comprise a liquid crystal display (LCD) and a touch panel (TP). If the screen comprises the touch panel, the screen can be implemented as a touch sensitive screen to receive input signals from the user. The touch panel comprises one or more touch sensors for sensing touch, slide, and gestures on the touch panel. The touch sensors can not only sense boundaries of a touch or slide action, but also detect duration and pressure related to a touch or slide operation. In some embodiments, the multimedia component 608 comprises a front camera and/or a rear camera. When the apparatus 600 is in operation (for example, in a camera mode or a video mode), the front camera and/or the rear camera can receive multimedia data from external. Each of the front camera and the rear camera can be a fixed optical lens system or have focus and optical zoom capability.

The audio component 610 is configured to output and/or input audio signals. For example, the audio component 610 comprises a microphone (MIC). When the apparatus 600 is in operation (for example, in a call mode, a recording mode, or a voice identification mode), the microphone is configured to receive audio signals from external. The received audio signals can be further stored in the memory 604 or transmitted via the communication component 616. In some embodiments, the audio component 610 further comprises a speaker for outputting the audio signals.

The I/O interface 612 provides an interface between the processor component 602 and peripheral interface modules such as a keyboard, a click wheel, buttons and so on. The buttons can comprise but are not limited to homepage buttons, volume buttons, start buttons and lock buttons.

The sensor component 614 comprises one or more sensors for providing various aspects of state elevations for the apparatus 600. For example, the sensor component 614 can detect On/Off state of the apparatus 600, and relative positions of the components (for example, a display and a keypad of the apparatus 600). The sensor component 614 can further detect the change of position of the apparatus 600 or a component of the apparatus 600, the presence of the touching by the user on the apparatus 600, location or acceleration/deceleration of the apparatus 600, and temperature change of the apparatus 600. The sensor component 614 can comprise a proximity sensor configured to detect the presence of a neighboring object without any physical touch. The sensor component 614 can further comprise an optical sensor such as a CMOS or CCD image sensor applicable for imaging. In some embodiments, the sensor component 614 can further comprise an acceleration sensor, a gyroscope sensor, a magnetic sensor, a pressure sensor or a temperature sensor.

The communication component 616 is configured to facilitate wireless or wire communication between the apparatus 600 and other devices. The apparatus 600 can access wireless networks based on communication standards such as 2G, 3G, or the combination thereof. In an exemplary embodiment, the communication component 616 receives broadcast signals or broadcast related information from an external broadcast management system via a broadcast channel. In an exemplary embodiment, the communication component 616 further comprises a near field communication (NFC) module for facilitating short range communication. For example, the NFC module can be implemented based on a Radio Frequency Identification (RFID) technology, an Infrared Data Association (IrDA) technology, an Ultra Wideband (UWB) technology, a Blue Tooth (BT) technology and other technologies.

In an exemplary embodiment, the apparatus 600 can be implemented by one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors, or other electronic elements so as to implement the above methods for presenting multimedia information.

In an exemplary embodiment, a non-temporary computer readable storage medium comprising instructions (for example, the memory 604 comprising instructions) executable by the processor 620 of the apparatus 600 to implement the above methods for presenting multimedia information is provided. For example, the non-temporary computer readable storage medium can be a ROM, a Random Access Memory (RAM), a CD-ROM, a magnetic tape, a floppy disk, an optical data storage device and so on.

A non-transient computer readable storage medium, instructions in the storage medium when executed by a processor of a terminal, enable the terminal to implement a method for presenting multimedia information, comprising: upon detecting a start event of an application, determining multimedia information to be published in the application in accordance with publishing policies and a set of multimedia information that are preset, wherein the set of multimedia information comprises at least one piece of multimedia information; presenting the multimedia information in a start interface of the application.

In another embodiment, the method further comprises downloading the publishing policies and the set of multimedia information by calling up an interface with a server.

In another embodiment, the processing of determining multimedia information to be published in the application in accordance with publishing policies and a set of multimedia information that are preset comprises: when the publishing policies comprise a list of publishing applications, determining whether the list of publishing applications comprises the application; when the list of publishing applications comprises the application, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a publishing time period of the application, acquiring a system time currently indicated by a clock; determining whether the system time belongs to the publishing time period; when the system time belongs to the publishing time period, determining the multimedia information to be published in the application in accordance with the publishing policies and the set of multimedia information.

In another embodiment, the processing of determining multimedia information to be published in the application in accordance with publishing policies and a set of multimedia information that are preset comprises: when the publishing policies comprise a first publishing frequency, calculating a total publishing frequency on the basis of publishing frequencies of every application on a terminal, wherein the first publishing frequency is used to indicate the publishing frequency of the terminal; when the total publishing frequency is less than the first publishing frequency, determining the multimedia information to be published in the application in accordance with the publishing policies and the set of multimedia information.

In another embodiment, the processing of determining multimedia information to be published in the application in accordance with the publishing policies and the set of multimedia information comprises: when the publishing policies further comprise designated multimedia information corresponding to the application, acquiring the designated multimedia information corresponding to the application from the set of multimedia information.

In another embodiment, the method further comprises: when the publishing policies comprise a plurality of pieces of designated multimedia information corresponding to the application and second publishing frequencies of every piece of designated multimedia information, for every piece of designated multimedia information corresponding to the application, acquiring the publishing frequency of the designated multimedia information, wherein the second publishing frequency is used to indicate the publishing frequency of a corresponding piece of designated multimedia information; when the publishing frequency of the designated multimedia information is less than the second publishing frequency thereof, taking the designated multimedia information as the multimedia information to be published in the application.

In another embodiment, the processing of determining multimedia information to be published in the application in accordance with the publishing policies and the set of multimedia information comprises: acquiring current weights of every piece of multimedia information in the set of multimedia information, wherein the weight is used to indicate a probability of selecting a corresponding piece of multimedia information; selecting the multimedia information to be published in the application from the set of multimedia information in the order of largest to least of the current weights of every piece of multimedia information.

In another embodiment, the method further comprises: upon detecting a viewing operation with respect to the multimedia information, displaying a detailed information page of the multimedia information; or upon detecting a sharing operation with respect to the multimedia information, transmitting a sharing request for the multimedia information to a server; or after the presenting of the multimedia information is finished, displaying a host interface of the application.

All of the above alternative technical solutions can be combined to form alternative embodiments of the present application, which are not redundantly described herein.

The person skilled in the art will readily think of other embodiments of the disclosure upon considering the specification and practicing the invention disclosed herein. The application is intended to cover any modifications, usages or adaptive variations of the disclosure, wherein the modifications, usages or adaptive variations follow general principles of the disclosure and comprise common sense or customary technical means in the art that are not disclosed in the disclosure. The specification and embodiments are merely considered as illustrative, and the scope of the invention is limited only by the following claims.

It should be noted that the disclosure is not limited to the precise structures described above and shown in the accompanying drawings, and can be modified and changed without departing the scope of the disclosure. The scope of the disclosure is limited only by the accompanying claims.

## Claims

1. A method for presenting multimedia information, being performed in a terminal and comprising:
downloading publishing policies and a set of multimedia information by calling up an interface with a server;
upon detecting a start event of an application, determining multimedia information to be published in the application in accordance with the publishing policies and the set of multimedia information that have been downloaded, wherein the set of multimedia information comprises a plurality of pieces of multimedia information (101);
presenting the multimedia information in a start interface of the application (102), wherein the determining multimedia information to be published in the application in accordance with the publishing policies and the set of multimedia information that have been downloaded comprises:
when the publishing policies comprise a list of publishing applications, determining whether the list of publishing applications comprises the application;
when the list of publishing applications comprises the application, determining the multimedia information to be published in the application in accordance with the publishing policies and the set of multimedia information.

2. The method of claim 1, wherein the determining multimedia information to be published in the application in accordance with the publishing policies and the set of multimedia information that have been downloaded comprises:
when the publishing policies comprise a publishing time period of the application, acquiring a system time currently indicated by a clock;
determining whether the system time belongs to the publishing time period;
when the system time belongs to the publishing time period, determining the multimedia information to be published in the application in accordance with the publishing policies and the set of multimedia information.

3. The method of any preceding claim, wherein the determining multimedia information to be published in the application in accordance with the publishing policies and the set of multimedia information that have been downloaded comprises:
when the publishing policies comprise a first publishing frequency, calculating a total publishing frequency on the basis of publishing frequencies of every application on a terminal, wherein the first publishing frequency is used to indicate the publishing frequency of the terminal;
when the total publishing frequency is less than the first publishing frequency, determining the multimedia information to be published in the application in accordance with the publishing policies and the set of multimedia information.

4. The method of any preceding claims, wherein the determining multimedia information to be published in the application in accordance with the publishing policies and the set of multimedia information that have been downloaded comprises:
when the publishing policies further comprise designated multimedia information corresponding to the application, acquiring the designated multimedia information corresponding to the application from the set of multimedia information.

5. The method of claim 4, further comprising:
when the publishing policies comprise a plurality of pieces of designated multimedia information corresponding to the application and second publishing frequencies of every piece of designated multimedia information, for every piece of designated multimedia information corresponding to the application, acquiring the publishing frequency of the designated multimedia information, wherein the second publishing frequency is used to indicate the publishing frequency of a corresponding piece of designated multimedia information;
when the publishing frequency of the designated multimedia information is less than the second publishing frequency thereof, taking the designated multimedia information as the multimedia information to be published in the application.

6. The method of any preceding claim, wherein the determining multimedia information to be published in the application in accordance with the publishing policies and the set of multimedia information that have been downloaded comprises:
acquiring current weights of every piece of multimedia information in the set of multimedia information, wherein the weight is used to indicate a probability of selecting a corresponding piece of multimedia information;
selecting the multimedia information to be published in the application from the set of multimedia information in the order of largest to least of the current weights of every piece of multimedia information.

7. The method of any preceding claim, further comprising:
upon detecting a viewing operation with respect to the multimedia information, displaying a detailed information page of the multimedia information; or
upon detecting a sharing operation with respect to the multimedia information, transmitting a sharing request for the multimedia information to a server; or
after the presenting of the multimedia information is finished, displaying a host interface of the application.

8. An apparatus for presenting multimedia information in a terminal and comprising:
a downloading module configured to download publishing policies and a set of multimedia information by calling up an interface with a server;
a determining module (501) configured to, upon detecting a start event of an application, determine multimedia information to be published in the application in accordance with the publishing policies and the set of multimedia information that have been downloaded, wherein the set of multimedia information comprises a plurality of pieces of multimedia information;
a presenting module (502) configured to present the multimedia information in a start interface of the application, wherein the determining module (501) is further configured to determine whether a list of publishing applications comprises the application when the publishing policies comprise the list of publishing applications; and determine the multimedia information to be published in the application in accordance with the publishing policies and the set of multimedia information when the list of publishing applications comprises the application.

9. The apparatus of claim 8, wherein the determining module is further configured to acquire a system time currently indicated by a clock when the publishing policies comprise a publishing time period of the application; determine whether the system time belongs to the publishing time period; and determine the multimedia information to be published in the application in accordance with the publishing policies and the set of multimedia information that have been downloaded when the system time belongs to the publishing time period.

10. The apparatus of claim 8 or claim 9, wherein the determining module is further configured to calculate a total publishing frequency on the basis of publishing frequencies of every application on a terminal when the publishing policies comprise the first publishing frequency; determine the multimedia information to be published in the application in accordance with the publishing policies and the set of multimedia information that have been downloaded when the total publishing frequency is less than the first publishing frequency.

11. The apparatus of any of claims 8 to 10, wherein the determining module is further configured to acquire designated multimedia information corresponding to the application from the set of multimedia information when the publishing policies further comprise the designated multimedia information corresponding to the application.

12. An apparatus of any of claims 8- 11, comprising:
a processor;
a memory for storing instructions executable by the processor;
wherein the processor comprises the downloading module, the determining module (501) and the presenting module (502).

13. A computer program product for a terminal including instructions for executing the steps of the method of any one of claims 1 to 7 when said program is executed by the terminal.

## Patentansprüche

1. Verfahren zum Präsentieren von Multimedia-Informationen, das in einem Endgerät ausgeführt wird und Folgendes beinhaltet:
Herunterladen von Veröffentlichungsrichtlinien und einem Satz von Multimedia-Informationen durch Aufrufen einer Schnittstelle mit einem Server;
Bestimmen, nach dem Erkennen eines Startereignisses einer Anwendung, von Multimedia-Informationen zur Veröffentlichung in der Anwendung gemäß den Veröffentlichungsrichtlinien und dem Satz von Multimedia-Informationen, die heruntergeladen wurden, wobei der Satz von Multimedia-Informationen mehrere Multimedia-Informationen (101) umfasst;
Präsentieren der Multimedia-Informationen in einer Startschnittstelle der Anwendung (102), wobei das Bestimmen von Multimedia-Informationen zur Veröffentlichung in der Anwendung gemäß den Veröffentlichungrichtlinien und dem Satz von Multimedia-Informationen, die heruntergeladen wurden, Folgendes beinhaltet:
Feststellen, wenn die Veröffentlichungsrichtlinien eine Liste von Veröffentlichungsanwendungen umfassen, ob die Liste von Veröffentlichungsanwendungen die Anwendung beinhaltet;
Bestimmen, wenn die Liste von Veröffentlichungsanwendungen die Anwendung umfasst, der Multimedia-Informationen zur Veröffentlichung in der Anwendung gemäß den Veröffentlichungsrichtlinien und dem Satz von Multimedia-Informationen.

2. Verfahren nach Anspruch 1, wobei das Bestimmen von Multimedia-Informationen zur Veröffentlichung in der Anwendung gemäß den Veröffentlichungsrichtlinien und dem Satz von Multimedia-Informationen, die heruntergeladen wurden, Folgendes beinhaltet:
Erfassen, wenn die Veröffentlichungsrichtlinien eine Veröffentlichungszeitperiode der Anwendung umfassen, einer aktuell von einer Uhr angezeigten Systemzeit;
Feststellen, ob die Systemzeit zur Veröffentlichungszeitperiode gehört;
Bestimmen, wenn die Systemzeit zur Veröffentlichungszeitperiode gehört, der Multimedia-Informationen zur Veröffentlichung in der Anwendung gemäß den Veröffentlichungsrichtlinien und dem Satz von Multimedia-Informationen.

3. Verfahren nach einem vorherigen Anspruch, wobei das Bestimmen von Multimedia-Informationen zur Veröffentlichung in der Anwendung gemäß den Veröffentlichungsrichtlinien und dem Satz von Multimedia-Informationen, die heruntergeladen wurden, Folgendes beinhaltet:
Berechnen, wenn die Veröffentlichungsrichtlinien eine erste Veröffentlichungshäufigkeit umfassen, einer Gesamtveröffentlichungshäufigkeit auf der Basis von Veröffentlichungshäufigkeiten jeder Anwendung auf einem Endgerät, wobei die erste Veröffentlichungshäufigkeit zum Anzeigen der Veröffentlichungshäufigkeit des Endgeräts benutzt wird;
Bestimmen, wenn die Gesamtveröffentlichungshäufigkeit geringer ist als die erste Veröffentlichungshäufigkeit, der Multimedia-Informationen zur Veröffentlichung in der Anwendung gemäß den Veröffentlichungsrichtlinien und dem Satz von Multimedia-Informationen.

4. Verfahren nach einem vorherigen Anspruch, wobei das Bestimmen von Multimedia-Informationen zur Veröffentlichung in der Anwendung gemäß den Veröffentlichungsrichtlinien und dem Satz von Multimedia-Informationen, die heruntergeladen wurden, Folgendes beinhaltet:
Erfassen, wenn die Veröffentlichungsrichtlinien ferner designierte Multimedia-Informationen entsprechend der Anwendung umfassen, der designierten Multimedia-Informationen entsprechend der Anwendung aus dem Satz von Multimedia-Informationen.

5. Verfahren nach Anspruch 4, das ferner Folgendes beinhaltet:
Erfassen, wenn die Veröffentlichungsrichtlinien mehrere designierte Multimedia-Informationen entsprechend der Anwendung und zweiten Veröffentlichungshäufigkeiten für jede designierte Multimedia-Information umfassen, für jede designierte Multimedia-Information entsprechend der Anwendung, der Veröffentlichungshäufigkeit der designierten Multimedia-Informationen, wobei die zweite Veröffentlichungshäufigkeit zum Anzeigen der Veröffentlichungshäufigkeit einer entsprechenden designierten Multimedia-Information benutzt wird;
Nehmen der designierten Multimedia-Informationen, wenn die Veröffentlichungshäufigkeit der designierten Multimedia-Informationen geringer ist als deren zweite Veröffentlichungshäufigkeit, als die Multimedia-Informationen zur Veröffentlichung in der Anwendung.

6. Verfahren nach einem vorherigen Anspruch, wobei das Bestimmen von Multimedia-Informationen zur Veröffentlichung in der Anwendung gemäß den Veröffentlichungsrichtlinien und dem Satz von Multimedia-Informationen, die heruntergeladen wurden, Folgendes beinhaltet:
Erfassen von aktuellen Gewichtungen jeder Multimedia-Information in dem Satz von Multimedia-Informationen, wobei die Gewichtung zum Anzeigen einer Wahrscheinlichkeit des Auswählens einer entsprechenden Multimedia-Information benutzt wird;
Auswählen der Multimedia-Informationen zur Veröffentlichung in der Anwendung aus dem Satz von Multimedia-Informationen in der Reihenfolge von der größten zur kleinsten der aktuellen Gewichtungen jeder Multimedia-Information.

7. Verfahren nach einem vorherigen Anspruch, das ferner Folgendes beinhaltet:
Anzeigen, nach dem Erkennen eines Betrachtungsvorgangs mit Bezug auf die Multimedia-Informationen, einer detaillierten Informationsseite der Multimedia-Informationen; oder
Senden, nach dem Erkennen eines Sharing-Vorgangs mit Bezug auf die Multimedia-Informationen, einer Sharing-Anforderung für die Multimedia-Informationen zu einem Server; oder
Anzeigen, wenn die Präsentation der Multimedia-Information beendet ist, einer Host-Schnittstelle der Anwendung.

8. Vorrichtung zum Präsentieren von Multimedia-Informationen in einem Endgerät, die Folgendes umfasst:
ein Herunterlademodul, konfiguriert zum Herunterladen von Veröffentlichungsrichtlinien und einem Satz von Multimedia-Informationen durch Aufrufen einer Schnittstelle mit einem Server;
ein Bestimmungsmodul (501), konfiguriert zum Bestimmen, nach dem Erkennen eines Startereignisses einer Anwendung, von Multimedia-Informationen zur Veröffentlichung in der Anwendung gemäß den Veröffentlichungsrichtlinien und dem Satz von Multimedia-Informationen, die heruntergeladen wurden, wobei der Satz von Multimedia-Informationen mehrere Multimedia-Informationen beinhaltet;
ein Präsentationsmodul (502), konfiguriert zum Präsentieren der Multimedia-Informationen in einer Startschnittstelle der Anwendung, wobei das Bestimmungsmodul (501) ferner zum Feststellen konfiguriert ist, ob eine Liste von Veröffentlichungsanwendungen die Anwendung umfasst, wenn die Veröffentlichungsrichtlinien die Liste von Veröffentlichungsanwendungen umfassen; und zum Bestimmen der Multimedia-Informationen zur Veröffentlichung in der Anwendung gemäß den Veröffentlichungsrichtlinien und dem Satz von Multimedia-Informationen, wenn die Liste von Veröffentlichungsanwendungen die Anwendung umfasst.

9. Vorrichtung nach Anspruch 8, wobei das Bestimmungsmodul ferner konfiguriert ist zum Erfassen einer von einer Uhr aktuell angezeigten Systemzeit, wenn die Veröffentlichungsrichtlinien eine Veröffentlichungszeitperiode der Anwendung umfassen; zum Feststellen, ob die Systemzeit zu der Veröffentlichungszeitperiode gehört; und zum Bestimmen der Multimedia-Informationen zur Veröffentlichung in der Anwendung gemäß den Veröffentlichungsrichtlinien und dem Satz von Multimedia-Informationen, die heruntergeladen wurden, wenn die Systemzeit zur Veröffentlichungszeitperiode gehört.

10. Vorrichtung nach Anspruch 8 oder Anspruch 9, wobei das Bestimmungsmodul ferner konfiguriert ist zum Berechnen einer Gesamtveröffentlichungshäufigkeit auf der Basis von Veröffentlichungshäufigkeiten jeder Anwendung auf einem Endgerät, wenn die Veröffentlichungsrichtlinien die erste Veröffentlichungshäufigkeit umfassen; Bestimmen der Multimedia-Informationen zur Veröffentlichung in der Anwendung gemäß den Veröffentlichungsrichtlinien und dem Satz von Multimedia-Informationen, die heruntergeladen wurden, wenn die Gesamtveröffentlichungshäufigkeit geringer ist als die erste Veröffentlichungshäufigkeit.

11. Vorrichtung nach einem der Ansprüche 8 bis 10, wobei das Bestimmungsmodul ferner konfiguriert ist zum Erfassen von designierten Multimedia-Informationen entsprechend der Anwendung aus dem Satz von Multimedia-Informationen, wenn die Veröffentlichungsrichtlinien ferner die designierten Multimedia-Informationen entsprechend der Anwendung umfassen.

12. Vorrichtung nach einem der Ansprüche 8-11, die Folgendes umfasst:
einen Prozessor;
einen Speicher zum Speichern von von dem Prozessor ausführbaren Befehlen;
wobei der Prozessor das Herunterlademodul, das Bestimmungsmodul (501) und das Präsentationsmodul (502) umfasst.

13. Computerprogrammprodukt für ein Endgerät mit Befehlen zum Ausführen der Schritte des Verfahrens nach einem der Ansprüche 1 bis 7, wenn das Programm von dem Endgerät ausgeführt wird.

## Revendications

1. Procédé de présentation d'informations multimédia étant effectué dans un terminal et comprenant :
télédécharger des politiques de publication et un ensemble d'informations multimédia en appelant une interface avec un serveur ;
lors de la détection d'un événement de démarrage d'une application, déterminer les informations multimédia à publier dans l'application conformément aux politiques de publication et à l'ensemble d'informations multimédia qui ont été télédéchargés,
dans lequel l'ensemble d'informations multimédia comprend une pluralité de pièces d'informations multimédia (101) ;
présenter les informations multimédia dans une interface de démarrage de l'application (102), où la détermination des informations multimédia à publier dans l'application conformément aux politiques de publication et à l'ensemble d'informations multimédia qui ont été télédéchargés comprend :
lorsque les politiques de publication comprennent une liste d'applications de publication, déterminer si la liste d'applications de publication comprend l'application ;
lorsque la liste d'applications de publication comprend l'application, déterminer les informations multimédia à publier dans l'application conformément aux politiques de publication et à l'ensemble d'informations multimédia.

2. Procédé selon la revendication 1, dans lequel la détermination des informations multimédia à publier dans l'application conformément aux politiques de publication et à l'ensemble d'informations multimédia qui ont été télédéchargés comprend :
lorsque les politiques de publication comprennent une période de temps de publication de l'application, acquérir un temps système indiqué actuellement par une horloge ;
déterminer si le temps système appartient à la période de temps de publication ;
lorsque le temps système appartient à la période de temps de publication, déterminer les informations multimédia à publier dans l'application conformément aux politiques de publication et à l'ensemble d'informations multimédia.

3. Procédé selon l'une quelconque des revendications précédentes, dans lequel la détermination des informations multimédia à publier dans l'application conformément aux politiques de publication et à l'ensemble d'informations multimédia qui ont été télédéchargés comprend :
lorsque les politiques de publication comprennent une première fréquence de publication, calculer une fréquence de publication totale sur la base des fréquences de publication de chaque application sur un terminal, où la première fréquence de publication est utilisée pour indiquer la fréquence de publication du terminal ;
lorsque la fréquence de publication totale est moindre que la première fréquence de publication, déterminer les informations multimédia à publier dans l'application conformément aux politiques de publication et à l'ensemble d'informations multimédia.

4. Procédé selon l'une quelconque des revendications précédentes, dans lequel la détermination des informations multimédia à publier dans l'application conformément aux politiques de publication et à l'ensemble d'informations multimédia qui ont été télédéchargés comprend :
lorsque les politiques de publication comprennent en outre des informations multimédia désignées correspondant à l'application, acquérir les informations multimédia désignées correspondant à l'application de l'ensemble d'informations multimédia.

5. Procédé selon la revendication 4, comprenant en outre :
lorsque les politiques de publication comprennent une pluralité de pièces d'informations multimédia désignées correspondant à l'application et des deuxièmes fréquences de publication de chaque pièce d'informations multimédia désignées, pour chaque pièce d'informations multimédia désignées correspondant à l'application, acquérir la fréquence de publication des informations multimédia désignées, où la deuxième fréquence de publication est utilisée pour indiquer la fréquence de publication d'une pièce correspondante d'informations multimédia désignées ;
lorsque la fréquence de publication des informations multimédia désignées est moindre que la deuxième fréquence de publication de celles-ci, prendre les informations multimédia désignées comme les informations multimédia à publier dans l'application.

6. Procédé selon l'une quelconque des revendications précédentes, dans lequel la détermination des informations multimédia à publier dans l'application conformément aux politiques de publication et à l'ensemble d'informations multimédia qui ont été télédéchargés comprend :
acquérir les poids courants de chaque pièce d'informations multimédia dans l'ensemble d'informations multimédia, où le poids est utilisé pour indiquer une probabilité de sélectionner une pièce correspondante d'informations multimédia ;
sélectionner les informations multimédia à publier dans l'application de l'ensemble d'informations multimédia dans l'ordre du plus grand au plus petit des poids courants de chaque pièce d'informations multimédia.

7. Procédé selon l'une quelconque des revendications précédentes, comprenant en outre :
lors de la détection d'une opération de visionnement au sujet des informations multimédia, afficher une page d'informations détaillées des informations multimédia ; ou bien
lors de la détection d'une opération de partage au sujet des informations multimédia, transmettre une requête de partage pour les informations multimédia au serveur ; ou bien
une fois que la présentation des informations multimédia est terminée, afficher une interface hôte de l'application.

8. Appareil de présentation d'informations multimédia dans un terminal et comprenant :
un module de télédéchargement configuré pour télédécharger des politiques de publication et un ensemble d'informations multimédia en appelant une interface avec un serveur ;
un module de détermination (501) configuré pour, lors de la détection d'un événement de démarrage d'une application, déterminer les informations multimédia à publier dans l'application conformément aux politiques de publication et à l'ensemble d'informations multimédia qui ont été télédéchargés,
dans lequel l'ensemble d'informations multimédia comprend une pluralité de pièces d'informations multimédia ;
un module de présentation (502) configuré pour présenter les informations multimédia dans une interface de démarrage de l'application , où le module de détermination (501) est configuré en outre pour déterminer si une liste d'applications de publication comprend l'application lorsque les politiques de publication comprennent la liste d'applications de publication ; et déterminer les informations multimédia à publier dans l'application conformément aux politiques de publication et à l'ensemble d'informations multimédia lorsque la liste d'applications de publication comprend l'application.

9. Appareil selon la revendication 8, dans lequel le module de détermination est configuré en outre pour acquérir un temps système actuellement indiqué par une horloge lorsque les politiques de publication comprennent une période de temps de publication de l'application ; déterminer si le temps système appartient à la période de temps de publication ; et déterminer les informations multimédia à publier dans l'application conformément aux politiques de publication et à l'ensemble d'informations multimédia qui ont été télédéchargés lorsque le temps système appartient à la période de temps de publication.

10. Appareil selon la revendication 8 ou la revendication 9, dans lequel le module de détermination est configuré en outre pour calculer une fréquence de publication totale sur la base des fréquences de publication de chaque application sur un terminal lorsque les politiques de publication comprennent la première fréquence de publication ; déterminer les informations multimédia à publier dans l'application conformément aux politiques de publication et à l'ensemble d'informations multimédia qui ont été télédéchargés lorsque la fréquence de publication totale est moindre que la première fréquence de publication.

11. Appareil selon l'une quelconque des revendications 8 à 10, dans lequel le module de détermination est configuré en outre pour acquérir des informations multimédia désignées correspondant à l'application de l'ensemble d'informations multimédia lorsque les politiques de publication comprennent en outre les informations multimédia désignées correspondant à l'application.

12. Appareil selon l'une quelconque des revendications 8 - 11, comprenant :
un processeur ;
une mémoire pour stocker des instructions exécutables par le processeur ;
dans lequel le processeur comprend le module de télédéchargement, le module de détermination (501) et le module de présentation (502).

13. Produit de programme informatique pour un terminal comprenant des instructions pour exécuter les étapes du procédé selon l'une quelconque des revendications 1 à 7 lorsque le programme est exécuté par le terminal.
